# EUROPÄISCHE PATENTSCHRIFT

(11) **EP 1 513 033 B1**
(45) Veröffentlichungstag und Bekanntmachung des Hinweises auf die Patenterteilung: **31.08.2016**
(21) Anmeldenummer: 03020210.5
(22) Anmeldetag: 05.09.2003
(51) Int. Cl.: G05B 5/01, G05B 11/42

(54) **Verfahren und Vorrichtung zur Regelung einer Regelgrösse**
Method and device for controlling a controlled variable
Procédé et dispositif de commande d'une grandeur de réglage

(43) Veröffentlichungstag der Anmeldung: 09.03.2005
(73) Patentinhaber: Siemens Aktiengesellschaft, 80333 München (DE)
(72) Erfinder: Winkes, Georg, 41564 Kaarst (DE)

(56) Entgegenhaltungen:
- EP-A- 0 533 148
- US-A- 5 270 916
- US-A- 5 298 845
- US-A- 5 303 142

## Beschreibung

Die Erfindung betrifft ein Verfahren und eine Vorrichtung zur Regelung einer Regelgröße, die über eine Stellgröße veränderbar ist, die in Abhängigkeit eines Sollwertes und eines Istwertes für die Regelgröße mit einem Regelalgorithmus berechnet wird, der einen Integralanteil und einen weiteren Anteil aufweist, wobei die Stellgröße, der Integralanteil und der weitere Anteil mit dem Regelalgorithmus berechnet werden.

Bei einem Prozess, bei dem es auf genaue Einhaltung von Prozessbedingungen ankommt, ist es erforderlich, den Prozess zu beobachten, Abweichungen von einem geforderten Verhalten zu registrieren und in geeigneter Art und Weise auf diese Abweichungen zu reagieren. Die Reaktion soll dazu führen, dass ein gefordertes Regel-Verhalten sich wieder einstellt. Zur Beobachtung des Prozesses müssen Signale gemessen werden, die den Prozess beschreiben bzw. Informationen über herrschende Zustände liefern wie z.B. Temperatur, Druck, Stoffgröße, Volumenstrom, ... Der Vergleich eines gemessenen mit einem geforderten Zustand, sowie die daraus vorzunehmenden Eingriffe in den Prozess können entweder von Menschen oder von Geräten vorgenommen werden. In beiden Fällen spricht man von Regelung. Eine Regelung ist gekennzeichnet durch die Schritte: Messen, Vergleichen und Regeln. Ein Regelkreis dient dazu, den vorgegebenen Wert einer physikalischen Größe als Regelgröße einzustellen. Hierbei werden der aktuelle Wert der physikalischen Größe und der vorgegebene. Wert gemessen und verglichen. Eine Differenz dieser beiden Werte muss durch entsprechende Maßnahmen beseitigt werden. Eine Größe, die zu diesem Zweck geändert werden muss und einen Einfluss auf den Wert der physikalischen Größe hat, wird als Stellgröße bezeichnet. Ein Mittel, das den Vergleich zwischen dem Istwert und dem Sollwert der physikalischen Größe zur Gewinnung einer Regelabweichung durchführt und einen Wert für die Stellgröße ermittelt, wird als Regler bezeichnet.

Bekannt sind so genannte PID- bzw. PI-Regler. Mit PID- bzw. PI-Reglern wird das zeitliche Verhalten einer Abweichung zwischen dem aktuellen und gewünschten Wert der physikalischen Größe in geeigneter Weise durch Vorgabe von drei bzw. zwei Regel-Parametern minimiert. Eine umfassende Beschreibung eines PID-Reglers ist z.B. in dem Lehrbuch "Regelungstechnik-ein praxisorientiertes Lehrbuch", Verlag Harri Deutsch, Frankfurt am Main, ISBN 3-8171-1653-5 beschrieben.

Aus der US-A-5 270 916 (DAVIS RICHARD K ET AL) ist bereits ein Regler bekannt, bei dem zur Verhinderung eines grenzenlosen Anwachsens des Integralteils das Reglerausgangssignal rückgekoppelt wird.

Für eine Regelsituation, bei der der PID- bzw. PI-Regler einen Wert für die Stellgröße errechnet, der größer als der maximale, einstellbare wirksame Wert der Stellgröße ist, können Probleme auftauchen. Wenn eine Regelabweichung vorhanden ist, kann der Wert des Integralanteils durch fortlaufende Integration weiter anwachsen. Wenn die Regelabweichung nun ein anderes Vorzeichen annimmt, muss der Regel-Algorithmus des PID- bzw. PI-Reglers zu dem Ergebnis führen, dass die Stellgröße sich von ihrem maximalen einstellbaren Wert entfernt. Da jedoch der Wert des Integralanteils möglicher Weise sehr hoch ist, könnte der PID- bzw. PI-Regler einer Störung nicht sofort entgegenwirken. Hierdurch können Grenzwerte vorübergehend überschritten werden. Ein Beispiel hierfür wäre der Einsatz eines solchen Reglers in einer Pumpgrenzregelung eines Verdichters. Die Regelgröße, die z.B. ein saugseitiger Volumenstrom sein kann, kann größer als der durch eine Regellinie vorgegebene Sollwert werden. Der Ausgang des PID- bzw. PI-Reglers führt zu einer vollständigen Schließung eines Regelventils. Da jedoch der PID- bzw. PI-Regler noch eine positive Regelabweichung erfasst, vergrößert sich der Integralanteil des PID- bzw. PI-Reglers. Wenn nun die Regelgröße den durch die Regellinie vorgegebenen Sollwert unterschreitet, muss das Regelventil unmittelbar öffnen. Da sich der Wert des Integralanteils des PID- bzw. PI-Reglers durch langen Betrieb im Bereich positiver Regelabweichungen erhöht hat, geschieht dies nicht. Die Regelung zeigt erst dann eine Wirkung, wenn der negative Wert des Proportionalanteils die Differenz zwischen diesem Wert und einer Ansprechschwelle des Stellelements erreicht. Es besteht hierbei die Gefahr, dass die Pumpgrenze im Falle einer Pumpgrenzregelung überschritten werden könnte.

Die Struktur des Reglerbausteins vom Kompaktregler ABB "Protronic PS2" zeigt das vorgenannte Verhalten. Hierbei wird aus einer Regelabweichung mit der Multiplikation einer Konstanten K_{P} bzw. Division mit einer Konstanten X_{P} der Proportionalanteil P gebildet. Der Proportionalanteil P wird zum Ausgangswert des Integralanteilwerts I addiert und bildet somit den Wert Yᵥ. Die wirksame Stellgröße wird gebildet indem der Wert Yᵥ durch eine Minimum- bzw. Maximumbegrenzung begrenzt wird.

Um das Anwachsen des Integralanteils bei Erreichen der Grenze des Stellbereichs zu verhindern, wird ein internes Rückführungssignal I_{R} gebildet. Die Rückführung I_{R} wird aus der Differenz des wirksamen Stellsignals Y und dem Proportionalanteil P gebildet. In jedem Integrationsschritt wird zu diesem Wert ein Integral-Inkremet e*ΔT/T_{N} addiert, wobei e die Regelabweichung, ΔT eine Zykluszeit und T_{N} eine Nachstellzeit eines Integrators darstellen. Ist der Wert des wirksamen Stellsignals Y gleich dem vom Regelalgorithmus ermittelten Wert für das Stellsignal vor dem Minimum-Maximum-Begrenzer Y_{V}, wächst oder fällt die Rückführung I_{R} nicht mehr und bleibt einen Schritt vor dem Begrenzungswert stehen.

Bei einem weiteren Anwachsen der Regelabweichung e wird der Wert des Proportionalanteils P größer und somit wird der Rückführwert I_{R} und der Ausgangswert des Integrators kleiner. Bei einem erneuten Sinken der Regelabweichung e muss der Wert des Integralanteils I wieder erhöht werden, damit der Wert Y_{V} weiterhin begrenzt wird. Die Erhöhung des Wertes des Integralanteils I ist lediglich mit einer maximalen Geschwindigkeit möglich, die begrenzt ist. Der maximale Wert der Geschwindigkeit für die Änderung des Integralanteils I liegt bei e/T_{N}. Wird dieser Wert überschritten, so entfernt sich der Ausgang trotz weiterhin positiver Regelabweichung e von der Grenze. Da der Reglerausgang Y hierbei scheinbar von der Ableitung der Regelabweichung e beeinflusst wird, spricht man hier von einem pseudo differenzierendem Verhalten.

Im Falle einer Begrenzungsregelung kann dies von Vorteil sein, weil damit vor Erreichen eines Grenzsollwertes eine Reaktion des Reglers bewirkt wird und ein Überschreiten des Grenzsollwertes verhindert oder verringert wird. Jedoch führt dieses Verfahren weit ab des Grenzwertes zu einem Verhalten, das unerwünscht ist, weil ein Stellelement hierbei unnötige Reaktionen zeigen könnte. Im Falle einer Pumpgrenzregelung könnte z.B. ein Regelventil bei einer Änderung des Volumenstroms oder bei einer Änderung der Drücke öffnen, obwohl noch ein ausreichender Abstand von der Regelkennlinie vorhanden ist.

Dieses Problem könnte durch Anhalten der fortlaufenden Integrierung des Integralanteils des PID- bzw. PI-Reglers beim Überschreiten einer Begrenzung gelöst werden.

Diese Lösung hat aber verschiedene Nachteile. Der Wert des gespeicherten Integralanteils ist abhängig von zeitlich vorangegangenen Einstellungen. Nähert sich der Ausgang des Reglers der Grenze mit geringer Regelabweichung und demnach kleinerem Wert des Proportionalanteils, so ist der gespeicherte Wert des Integralanteils höher, als wenn dies mit hoher Regelabweichung geschieht. Die Begrenzung könnte für den letzteren Fall wieder unterschritten werden, wenn die Regelabweichung wieder verringert wird. Ein Stellelement wie z.B. ein Regelventil würde trotz vorhandener positiver Regelabweichung vorübergehend öffnen.

Ein weiterer Nachteil ist, dass ein Regler mit einem Reglerbaustein ausgestattet sein muss, der die Überschreitung der Begrenzung erkennt. Ein weiteres Problem tritt auf, wenn während des Betriebes an der Begrenzung die obere Grenze für die Regelgröße verkleinert oder die untere Grenze vergrößert wird. Es kann hierbei geschehen, dass im Integralanteil ein Wert gespeichert wird, der auch bei verschwindendem Proportionalanteil nicht zu einem Überschreiten der Grenze führt. Eine Veränderung der Grenzen im Betrieb führt demnach zu Störungen und diese sollten unterbleiben.

Für anspruchsvolle Regelaufgaben wie z.B. die Pumpgrenzregelung eines Verdichters ist diese Methode kaum geeignet.

Die Aufgabe der vorliegenden Erfindung ist es, ein Verfahren, und eine Vorrichtung zur Regelung einer Regelgröße, die über eine Stellgröße veränderbar ist und in Abhängigkeit eines Sollwertes mit einem Regelalgorithmus berechnet wird, anzugeben, das ein verbessertes Regelverhalten zeigt.

Die auf das Verfahren hin gerichtete Aufgabe wird gelöst durch ein Verfahren zur Regelung einer Regelgröße, die über eine Stellgröße veränderbar ist, die in Abhängigkeit eines Sollwertes und eines Istwertes für die Regelgröße mit einem Regelalgorithmus berechnet wird, der einen Integralanteil und einen weiteren Anteil aufweist, wobei die Stellgröße, der Integralanteil und der weitere Anteil mit dem Regelalgorithmus berechnet werden, wobei der Wert der Stellgröße zuerst mit dem Regelalgorithmus berechnet wird und nach einem Minimum-Maximum-Begrenzer begrenzt und an den Regelalgorithmus zurückgemeldet wird, wobei eine Änderung des weiteren Anteils vernachlässigt wird, wenn folgende Bedingungen eintreten:
- der mit dem Regelalgorithmus berechnete Wert für die Stellgröße ist größer als der Wert, der nach dem Minimum-Maximum-Begrenzer begrenzt wird und
- eine Regelabweichung, die aus der Differenz zwischen dem Sollwert und der Regelgröße ermittelt wird, ist größer oder gleich einem vorgebbaren Grenzwert X_{w,positiv} oder
- der mit dem Regelalgorithmus berechnete Wert für die Stellgröße ist kleiner als der Wert, der nach dem Minimum-Maximum-Begrenzer begrenzt wird und
- die Regelabweichung ist kleiner oder gleich einem vorgebbaren Grenzwert X_{w,negativ}.

Das Umschalten auf dieses neue Verhalten wird als Umschaltlogik bezeichnet. Durch dieses neue Verfahren ist es möglich, dass der Wert des Integralanteils eines Reglers nicht fortlaufend erhöht wird. Ein weiterer Vorteil dieses Verfahrens ist, dass bei aktiver Begrenzung ein reproduzierbares Verhalten entsteht. Darüber hinaus ist bei aktiver Begrenzung eine Änderung der Grenzwerte im Betrieb möglich.

Zweckmäßigerweise ist der weitere Anteil ein Proportionalanteil.

In einer vorteilhaften Weitergestaltung wird das Verfahren für ein Regelalgorithmus eingesetzt, der einen Differentialanteil aufweist und dieser Differentialanteil zu dem Proportionalanteil addiert wird. Dadurch ist es möglich, die Genauigkeit der Regelung zu erhöhen.

In einer weiteren vorteilhaften Weitergestaltung wird der weitere Anteil vernachlässigt, wenn folgende Bedingung zusätzlich eintritt:
- Signal wurde nach oben begrenzt und
- eine Änderung der Regelabweichung e ist größer als ein vorgebbarer Grenzwert X_{w,positiv} oder
- Signal wurde nach unten begrenzt und
- eine Änderung der Regelabweichung e ist kleiner als ein vorgebbarer Grenzwert Δ X_{w,negativ}.

Hierdurch ist es möglich, ein Signalrauschen der Regelabweichung zu berücksichtigen.

In einer weiteren vorteilhaften Ausgestaltung können Änderungen des Sollwertes wahlweise zur Berechnung des Differentialanteils berücksichtigt werden.

Zweckmäßigerweise wird zur Verbesserung des Zeitverhaltens des Reglers der Differentialanteil mit einer einstellbaren Zeitkonstanten gefiltert.

Zweckmäßigerweise wird das Verfahren für den Betrieb eines Verdichters verwendet.

Die auf die Vorrichtung hin gerichtete Aufgabe wird gelöst durch eine Vorrichtung zur Regelung einer Regelgröße, die über eine Stellgröße veränderbar ist, mit einem Subtrahier-Baustein zur Berechnung einer Regelabweichung durch Subtrahieren eines Sollwertes der Regelgröße von einem Istwertes der Regelgröße, einem Integral-Inkrement-Baustein zum Berechnen eines Integral-Inkrement-Anteils für die Stellgröße als Ausgangssignal aufgrund der Regelabweichung, einem weiteren Baustein zum Berechnen eines weiteren Anteils für die Stellgröße als Ausgangssignal aufgrund der Regelabweichung, wobei die Vorrichtung folgende Bausteine umfasst :
Einen Umschalt-Additions-Baustein, der einen ersten Eingang für das Ausgangssignal des weiteren Bausteins,
einen zweiten Eingang für das Ausgangssignal des Integral-Inkrement-Bausteins,
einen dritten Eingang für ein Schaltsignal und
einen vierten Eingang für ein Signal aus einem Minimum-Maximum-Begrenzer, der zur Begrenzung des Wertes für die Stellgröße auf einen voreingestellten Wert ausgebildet ist, wobei der Umschalt-Additions-Baustein zum Berechnen eines Wertes für die Stellgröße als Ausgangssignal aufgrund des weiteren Bausteins, dem Ausgangssignal des Integral-Inkrement-Baustein und des Signals aus dem Minimum-Maximum-Begrenzers ausgebildet ist, wobei der Umschalt-Additions-Baustein zwischen einem ersten Zustand, bei dem das Ausgangssignal des weiteren Bausteins zur Berechnung der Stellgröße addiert wird und einem zweiten Zustand, bei dem das Ausgangssignal des weiteren Bausteins geblockt wird, umschaltbar ist, und einen Schalt-Baustein zum Erzeugen des Schaltsignals für den Umschalt-Additions-Bausteins, wobei der Schalt-Baustein derart ausgebildet ist, dass ein Schaltsignal zum Umschalten in den zweiten Zustand an den Umschalt-Additions-Baustein gesendet wird, wenn der Wert der Stellgröße größer als der nach dem Minimum-Maximum-Begrenzer voreingestellten Wert ist und die Regelabweichung größer oder gleich einem vorgebbaren Grenzwert X_{w,positiv} ist oder wenn der Wert der Stellgröße kleiner als der nach dem Minimum-Maximum-Begrenzer voreingestellte Wert ist und die Regelabweichung kleiner oder gleich einem vorgebbaren Grenzwert X_{w,negativ} ist. Die Vorteile ergeben sich entsprechend der Beschreibung zur Lösung des Verfahrens.

In einer vorteilhaften Weitergestaltung umfasst der Umschalt-Additions-Baustein einen Umschalt-Baustein und einen Additions-Baustein.

Zweckmäßigerweise wird das Ausgangssignals des weiteren Bausteins und das Signal aus dem Minimum-Maximum-Begrenzer zusammengefasst und an den Umschalt-Baustein weitergeführt, und das Signal aus dem Minimum-Maximum-Begrenzer ebenfalls an den Umschalt-Baustein weitergeführt und der Umschalt-Baustein ist derart ausgebildet, dass zwischen einem ersten Zustand, bei dem die Summe des Signals durchgeleitet wird und einem zweiten Zustand, bei dem nur das Signal nach dem Minimum-Maximum-Begrenzer vorliegt, umschaltbar ist. Zweckmäßigerweise wird der Additions-Baustein, der einen ersten Eingang für das Ausgangssignal des Umschalt-Bausteins und einen zweiten Eingang für das Ausgangssignal des Integral-Inkrement-Bausteins aufweist, derart ausgebildet, dass das Ausgangssignal des Umschalt-Bausteins und das Ausgangssignal des Integral-Inkrement-Bausteins zu einem Ausgangssignal addiert werden.

In einer alternativen Ausführungsform wird der Umschalt-Baustein derart ausgebildet, dass der Umschalt-Baustein einen Eingang für ein den Wert Null aufweisendes Signal sowie zwischen einem ersten Zustand, bei dem das Ausgangssignal des weiteren Bausteins als Ausgangssignal durchgeleitet wird und einem zweiten Zustand, bei dem das den Wert Null aufweisende Signal durchgeleitet wird, umschaltbar ist.

Zweckmäßigerweise weist der Additions-Baustein einen weiteren Eingang auf, an dem das Signal aus dem Minimum-Maximum-Begrenzer anliegt.

Zweckmäßigerweise umfasst der weitere Baustein einen Proportionalanteil-Baustein und einen Differentialanteil-Baustein. Dadurch wird die Genauigkeit der Regelung erhöht.

In einer weiteren vorteilhaften Weitergestaltung wird der Differentialanteil-Baustein derart ausgebildet, dass zwischen einem ersten Zustand, bei dem die Änderung des Sollwertes durchgeleitet wird und einem zweiten Zustand, bei dem nur die Regelabweichung weitergeleitet wird, umgeschaltet wird. Die Genauigkeit der Regelung wird dadurch erhöht.

In einer weiteren vorteilhaften Weitergestaltung weist der Differentialanteil-Baustein einen Verzögerungs-Baustein zum Berechnen des Differentialanteils auf. Dadurch wird die Genauigkeit der Regelung erhöht.

Zweckmäßigerweise wird ein erster Zwischenspeicher-Baustein zwischen dem Minimum-Maximum-Begrenzer und dem Umschalt-Addier-Baustein, ein zweiter Zwischenspeicher-Baustein zwischen dem Minimum-Maximum-Begrenzer und dem Schalt-Baustein und ein dritter Zwischenspeicher-Baustein zwischen dem weiteren Baustein und dem Umschalt-Additions-Baustein eingesetzt. Damit ist es möglich, Rechenwerte eines vorherigen Zykluses zu berücksichtigen.

Die Erfindung wird anhand folgender Ausführungsbeispiele beschrieben. In den Figuren haben jeweils gleiche Bezugszeichen die gleiche Bedeutung.

Dabei zeigen:
- Figur 1: Blockschaltbild eines Regel-Schaltkreises
- Figur 2: ein Blockschaltbild eines Regel-Schaltkreises mit Darstellung eines Proportional- und Integralanteils;
- Figur 3: eine weitere Ausführungsform des Regel-Schaltkreises;
- Figur 4: ein Blockschaltbild mit Darstellung einer Umschaltlogik;
- Figur 5: ein Blockschaltbild mit Darstellung einer Grenzwertstabilisierung;
- Figur 6: ein Blockschaltbild mit Differentialanteil-Baustein;
- Figur 7: ein Blockschaltbild mit Darstellung einer zeitdiskreten Differentation;

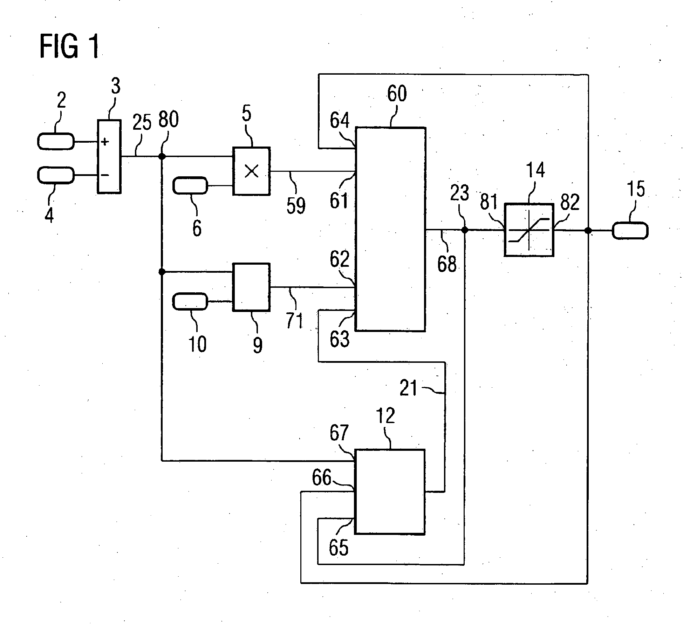

In Figur 1 ist ein Blockschaltbild eines Regel-Schaltkreises dargestellt. In einem Subtrahier-Baustein 3 wird ein Wert für eine Regelabweichung 25 aus einem Sollwert 2 und einem Istwert 4 als Ausgangssignal 80 gebildet und zum weiteren Baustein 5 geführt. Bei inversem Wirksinn des Reglers müssen die Vorzeichen getauscht werden. Das Ausgangsignal 80 des Subtrahier-Bausteins 3 wird an einen Eingang des weiteren Bausteins 5 weitergeleitet. Der weitere Baustein 5 weist einen weiteren Eingang auf, der mit einem Ausgang eines Speicher-Bausteins 6 verbunden ist. Im Speicher-Baustein 6 ist ein Wert gespeichert, der als Ausgangsignal an den weiteren Baustein 5 weitergeleitet wird. Der im Speicher-Baustein 6 gespeicherte Wert wird auch als Konstante K_{P} bezeichnet. Der weitere Baustein 5 ist derart ausgebildet, dass der Wert der Regelabweichung 25 mit dem im Speicher-Baustein 6 gespeicherten Wert multipliziert wird und als Ausgangsignal 59 an einen ersten Eingang 61 eines Umschalt-Additions-Bausteins 60 weitergeleitet wird.

Das Ausgangssignal 80 wird auch an ein Integral-Inkrement-Baustein 9 weitergeleitet und dort mit einem Wert 10 multipliziert und als Ausgangsignal 71 zum Umschalt-Additions-Baustein 60 weitergeleitet. Der Wert 10 wird gebildet aus dem Quotienten mit einer Zykluszeit ΔT und einer Nachstellzeit TN eines Integrators.

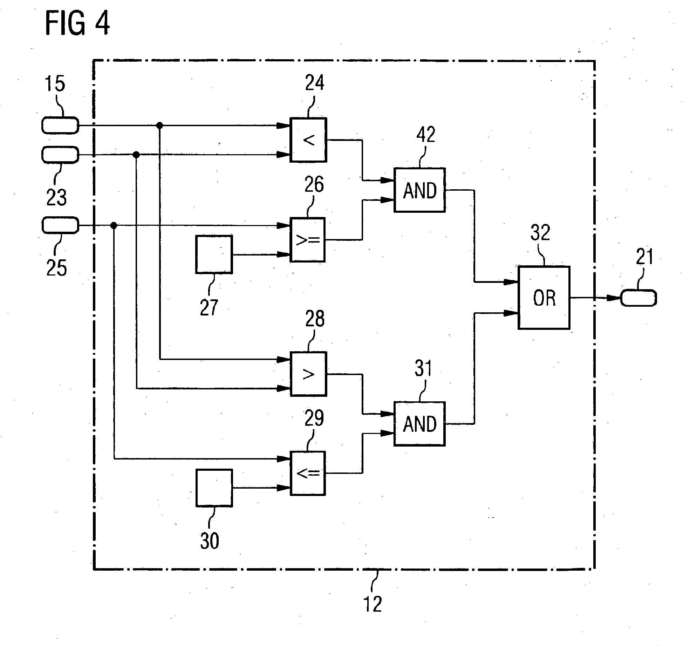

Der Umschalt-Additions-Baustein 60 weist vier Eingänge auf: Den ersten Eingang 61 für das Ausgangssignal 59 des weiteren Bausteins 5, einen zweiten Eingang 62 für ein Ausgangssignal 71 des Intergral-Inkrement-Bausteins 9, einen dritten Eingang 63 für ein Schaltsignal 21 aus einem Schalt-Baustein 12 und einen vierten Eingang 64 für ein an einem Ausgang 82 eines Minimum-Maximum-Begrenzers 14 anliegendem Stellgrößen-Signals 15. Der Schalt-Baustein 12 weist drei Eingänge 65, 66, 67 auf. An dem Eingang 67 liegt das Ausgangssignal 80 des Subtrahier-Bausteins 3 an, am Eingang 65 liegt ein Reglerausgangsignal 23 an und am Eingang 66 liegt das Stellgrößensignal 15 an. Die Wirkungsweise des Schalt-Bausteins 12 ist in der Figur 4 beschrieben.

Ein Ausgangssignal 68 des Umschalt-Additions-Bausteins 60 liegt an einem Eingang 81 des Minimum-Maximum-Begrenzers 14 an. Der Umschalt-Additions-Baustein 60 ist derart ausgebildet, dass er zwischen einem ersten Zustand bei dem das Ausgangssignal 59 des weiteren Bausteins 5 zur Berechnung des Stellgrößensignals 15 addiert wird und einem zweiten Zustand, bei dem Änderungen des Ausgangssignals 59 des weiteren Bausteins 5 geblockt werden, umschaltbar ist.

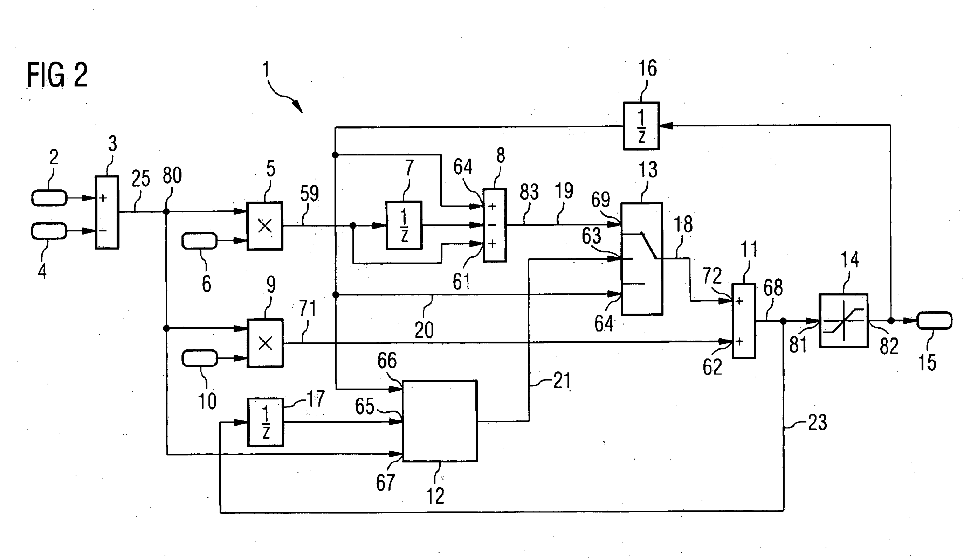

In der Figur 2 ist ein Blockschaltbild eines Regel-Schaltkreises mit Darstellung eines Proportional- und Integralanteils dargestellt. Der Umschalt-Additions-Baustein 60 umfasst in dieser Ausführungsform einen Umschalt-Baustein 13 und einen Additions-Baustein 11. Der Umschalt-Baustein 13 weist den dritten Eingang 63 und den vierten Eingang 64 auf. Der Additions-Baustein 11 weist den zweiten Eingang 62 und einen fünften Eingang 72 auf, der mit einem Ausgangssignal 18 des Umschalt-Bausteins 13 verbunden ist. Der erste Eingang 61 und der vierte Eingang 64 sind an einem Addier-Baustein 8 vorgesehen, der ein Ausgangsignal 83 liefert, das an einem sechsten Eingang 69 des Umschalt-Bausteins 13 anliegt.

Im weiteren Baustein 5 wird das Ausgangssignal 59 gebildet, das als weiterer Anteil bezeichnet wird, der zur Berechnung des Stellgrößensignals 15 eingesetzt wird. Dieser weitere Anteil ist in diesem Fall ein Proportionalanteil.

Das Stellgrößensignal 15 wird über einen ersten Zwischenspeicher-Baustein 16 an den Addier-Baustein 8 weitergeleitet und wird auch als rückgemeldetes Signal Y_{Rück} bezeichnet.

Das Reglerausgangssignal 23, das an dem Eingang 81 des Minimum-Maximum-Begrenzer 14 anliegt wird über einen zweiten Zwischenspeicher-Baustein 17 zum Schalt-Baustein 12 weitergeleitet.

Es werden Veränderungen des weiteren Anteils aus dem weiteren Baustein 5 gegenüber einem vorherigen Bearbeitungsschritt weiterverarbeitet. Dazu gelangt das Ausgangssignal 59 aus dem weiteren Baustein 5 zu einem dritten Zwischenspeicher-Baustein 7 und gelangt von dort zu dem Addier-Baustein 8. Der dritte Zwischenspeicher-Baustein 7 kann als Halteglied 1. Ordnung ausgebildet sein. Dies ist z.B. durch eine entsprechende Abarbeitungsreihenfolge der Programmbausteine darstellbar. Das Ausgangssignal 59 aus dem weiteren Baustein 5 wird ebenso direkt zum Addier-Baustein 8 geführt. Dies verschafft die Möglichkeit, lediglich Änderungen des Ausgangsignals 59 über eine Zykluszeit im Addier-Baustein 8 zu verarbeiten.

Das Ausgangssignal 80 des Subtrahier-Bausteins 3 liegt an dem Eingang 67 des Schalt-Bausteins 12 an. Der Schalt-Baustein 12 ist in Figur 4 näher beschrieben. Das Ausgangsignal 18 liegt an dem fünften Eingang 72 des Addier-Bausteins 11 an und wird dort mit dem Ausgangsignal 71 des Integral-Inkrement-Bausteins 9 multipliziert. An einem Ausgang des Addier-Bausteins 11 liegt das Reglerausgangssignal 23 an. Das Reglerausgangssignal 23 wird mittels des Minimum-Maximum-Begrenzer 14 begrenzt und liegt anschließend als Stellgrößensignal 15 vor.

Ein Ausgang des Schalt-Bauteils 12 liegt am dritten Eingang 63 des Umschalt-Bausteins 13 an. Das aus dem ersten Zwischenspeicher-Baustein 16 kommende Signal liegt am vierten Eingang 64 des Umschalt-Bausteins 13 und am Eingang 66 des Schalt-Bausteins 12 an. Die Funktion des Umschalt-Bausteins 13 hängt von dem Ausgang des Schalt-Bausteins 12 ab. In einem unbegrenzten Betrieb hat der Umschalt-Baustein 13 die in der Figur 2 beschriebene Stellung. Liefert der Schalt-Baustein 12 ein Schaltsignal 21 mit einem logischen Wert 1, ändert sich die Funktion des Umschalt-Bausteins 13 wie folgt: das Ausgangssignal 18 wird nicht mehr über eine Leitung 19 am sechsten Eingang 69, sondern über eine Leitung 20 am vierten Eingang 64 gebildet.

Zusätzlich wird das in einem vorherigen Zyklus berechnete und anliegende Stellgrößensignal 15 nach dem ersten Zwischenspeicher-Baustein 16 als Arbeitspunkt hinzuaddiert. Mit den in Figur 2 dargestellten Zwischenspeicher-Bausteinen 7, 16 und 17 soll verdeutlicht werden, dass mit Rechenwerten eines letzten Zyklusses gearbeitet wird.

Liefert der Schalt-Baustein 12 ein Schaltsignal 21 mit einem logischen Wert 1, so wird die Änderung des weiteren Anteils, die als Ausgangssignal 59 am weiteren Baustein 5 anliegt, vernachlässigt. Das neue Reglerausgangssignal 23 entsteht im Addier-Baustein 11 durch die Addition des Ausgangssignals 71 des Integral-Inkrement-Bausteins 9 mit dem Signal Y_{Rück} aus dem ersten Zwischenspeicher-Baustein 16. Das Reglerausgangssignal 23 wird durch ein Reglerunterprogramm oder extern z.B. durch eine Minimum- oder Maximum-Auswahl mit Ausgangssignalen anderer Regler begrenzt.

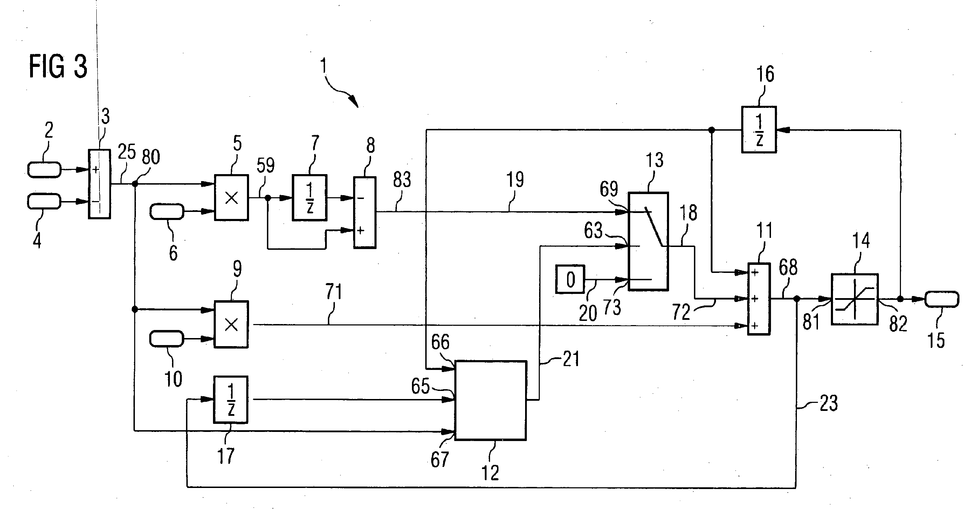

In der Figur 3 ist eine weitere Ausführungsform des Regel-Schaltkreises dargestellt. Im Unterschied zur Figur 2 wird hierbei ein Signal nach dem ersten Zwischenspeicher-Baustein 16 direkt an den Additions-Baustein 11 weitergeleitet. Im Unterschied zur der in Figur 2 dargestellten Ausführungsform weist der Additions-Baustein 11 nun einen weiteren Eingang auf, der mit dem ersten Zwischenspeicher-Baustein 16 verbunden ist. Der in Figur 3 dargestellte Addier-Baustein 8 weist nun im Gegensatz zu der Ausführungsform des in Figur 2 dargestellten Addier-Bausteins 8 lediglich zwei Eingänge auf. Dies führt zu dem Vorteil, dass das Stellgrößensignal 15 gemäß Figur 3 über dem ersten Zwischenspeicher-Baustein 16 direkt am Additions-Baustein 11 anliegt und das Stellgrößensignal 15 unabhängig vom Umschalt-Baustein 13 am Additions-Baustein 11 anliegt. Der Umschalt-Baustein 13 weist einen siebten Eingang 73 auf, an dem ein Signal anliegt, das dem Wert Null entspricht.
In der Figur 4 ist der Schalt-Baustein 12 näher dargestellt. Kerngedanke ist hierbei, in Abhängigkeit von der Regelabweichung 25 die Struktur des Reglers bei aktiver Begrenzung umzuschalten. Das Schaltsignal 21 des Schalt-Bausteins 12 kann einen Wert annehmen, der einem logischen Wert eins oder Null entspricht. Das Stellgrößensignal 15 wird mit dem Reglerausgangssignal 23 im Baustein 24 verglichen. Der Wert der Regelabweichung 25 wird im Baustein 26 mit einem vorgebbaren positiven Regelgrenzwert X_{w,positiv} 27 verglichen. Ist das Stellgrößensignal 15 kleiner als das Reglerausgangssignal 23 und ist der Wert der Regelabweichung 25 größer oder gleich dem positiven Regelgrenzwert X_{w,positiv} 27, so entspricht das Schaltsignal 21 einem logischen Wert 1. Das Stellgrößensignal 15 wird auch an den Baustein 28, in dem eine negative Begrenzung berücksichtigt wird, weitergeleitet. Ebenfalls zum Baustein 28 wird das Reglerausgangssignal 23 geleitet. Der Wert der Regelabweichung 25 wird im Baustein 29 mit einem vorgebbaren negativen Grenzwert X_{w,negativ} 30 verglichen. Ist das Stellgrößensignal 15 größer als das Reglerausgangssignal 23 und ist der Wert der Regelabweichung 25 kleiner oder gleich dem negativen Regelgrenzwert X_{w,negativ} 30, so wird über einen Und-Baustein 31 und einem Oder-Baustein 32 ein Schaltsignal 21 gebildet, das einem logischen Wert eins entspricht.

Treten diese Bedingungen nicht mehr auf, so liefert der Schalt-Baustein 12 einen Wert, der einem logischen Wert Null entspricht und der Regelalgorithmus wird umgeschaltet.

In einer alternativen Ausführungsform kann der Regel-Schaltkreis derart ausgebildet sein, dass ein inverser Wirksinn möglich ist. Dabei fällt das Ausgangssignal bei steigendem Sollwert. Dies wird erreicht durch Vertauschen der Eingänge an dem Subtrahier-Baustein 3 und dem Addier-Baustein 46.

In einer alternativen Ausführungsform wird der erste Zwischenspeicher-Baustein 16 mit einem externen Signalgeber verbunden. Über den externen Signalgeber werden über Minimum- und Maximum-Auswahlen noch andere Regler oder sonstige Signale mit berücksichtigt.

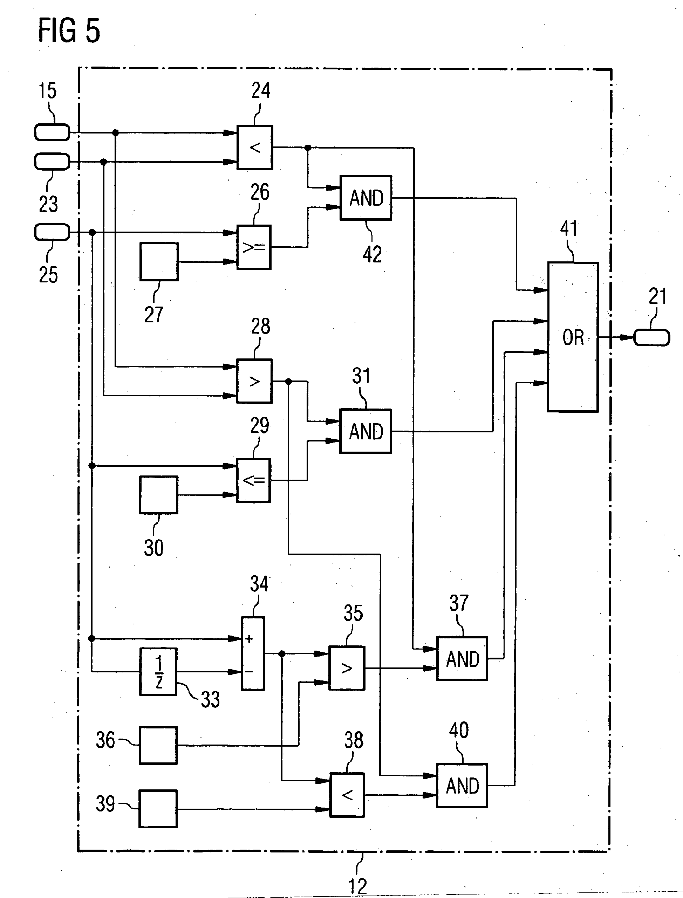

In der Figur 5 ist eine weitere Ausführungsform des Schalt-Bausteins 12 dargestellt. Im Vergleich zu der in Figur 4 dargestellten Ausführungsform des Schalt-Bausteins 12 sind in der Figur 5 weitere Bausteine enthalten, die die Möglichkeit schaffen, ein Rauschen der Regelabweichung 25 zu berücksichtigen. Der Wert der Regelabweichung 25 liegt über einen weiteren Zwischenspeicher-Baustein 33 und einem Baustein 34 an einem Baustein 35 an. Im Baustein 35 wird eine Änderung des Wertes der Regelabweichung 25 mit einem vorgebbaren Grenzwert Δ X_{w,positiv} 36 verglichen. Tritt die Bedingung ein, dass die Änderung des Wertes der Regelabweichung 25 größer als der Grenzwert Δ X_{w,positiv} 36 ist, wird ein logisches Signal an den Baustein 37 weitergeleitet. Der Baustein 37 ist ein Und-Baustein. Ein zweites Signal, das im Baustein 37 verarbeitet wird, kommt aus dem Baustein 24 und liefert ein Signal für eine obere Begrenzung. Die Änderung des Wertes der Regelabweichung 25 wird ebenfalls an den Baustein 38 weitergeleitet. Im Baustein 38 wird die Änderung des Wertes der Regelabweichung 25 mit einem vorgebbaren negativen Grenzwert Δ X_{w,negativ} 39 verglichen. Ist die Änderung des Wertes der Regelabweichung 25 kleiner als der Grenzwert Δ X_{w,negativ} 39, so wird ein Wert, der einem logischen Wert 1 entspricht an den Baustein 40 weitergeleitet. Der Baustein 40 ist ein Und-Baustein. Zu diesem Baustein 40 wird das Signal weitergeleitet, das aus dem Baustein 28 kommt. Sind beide Signale mit einem Wert, der einem logischen Wert 1 entspricht zum Baustein 40 angekommen, so wird ein Wert, der einem logischen Wert 1 entspricht zum Baustein 41 weitergeleitet. Der Baustein 41 ist ein Oder-Baustein, der mit dem Baustein 32 aus der Figur 3 vergleichbar ist. Der Oder-Baustein 41 hat nun 4 Eingänge, die von den Bausteinen 42, 31, 37 und 40 herrühren. Mit anderen Worten wird hierbei in den Blöcken 33, 34 und 35 zusätzlich noch überwacht, ob sich der Wert der Regelabweichung 25 im Betrieb an der Begrenzung nur minimal, z**.**B**.** durch Signalrauschen von einem Regelzyklus zum nächsten verändert hat. In einem solchen Fall wird ebenfalls eine Änderung des weiteren Anteils vernachlässigt. Der dargestellte Zwischenspeicher 33 kann auch ein Halteglied höherer Ordnung oder ein beliebiger diskreter Filter, ein Verzögerungselement oder ein Totzeitglied sein.

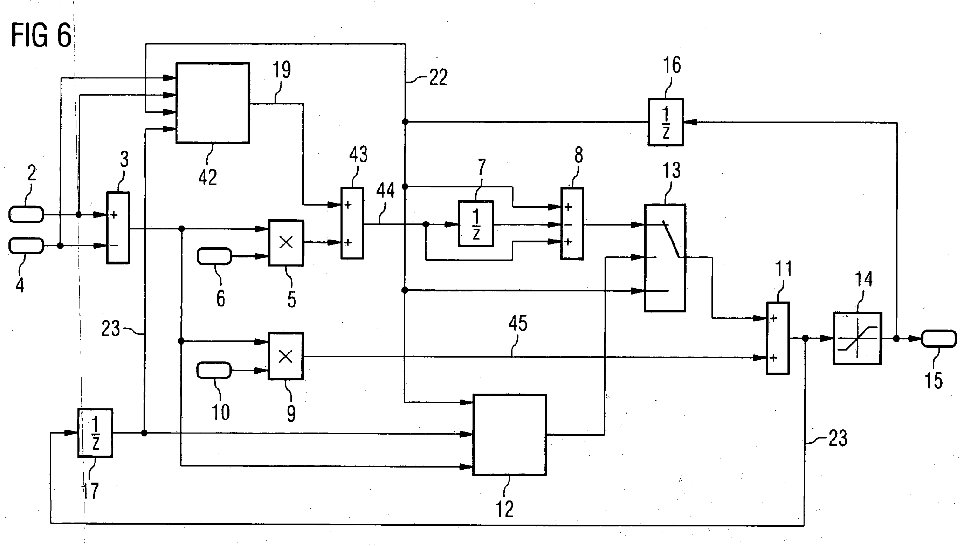

In der in den Figuren 1, 2 und 3 dargestellten Ausführungsformen des Regelschaltkreises weist der weitere Anteil einen Proportional-Anteil auf. In der Figur 6 ist eine weitere vorteilhafte Ausführungsform des Regel-Schaltkreises dargestellt, wobei der weitere Anteil nun den Proportionalanteil und einen Differentialanteil aufweist. In einem Differenzialanteil-Bustein 42 wird ein Wert für den Differenzialanteil aus dem Sollwert 2, dem Istwert 4, dem Stellgrößensignal 15 und dem Reglerausgangssignal 23 gebildet und an einen Addier-Baustein 43 als Ausgangssignal 19 weitergeleitet. Die Berechnung des Differenzialanteils erfolgt nach den im Stand der Technik beschriebenen Vorgehensweisen.

In dem Addier-Baustein 43 wird das Ausgangssignal 19 des Differentialanteil-Bausteins 42 und des weiteren Bausteins 5 zu einem Ausgangsignal 44 addiert und über den dritten Zwischenspeicher-Baustein 7 an den Addier-Baustein 8 weitergeleitet und von dort über den Umschalt-Baustein 13 an den Addier-Baustein 11 weitergeführt. Im Unterschied zu den in den Figuren 1, 2 und 3 dargestellten Ausführungsformen weist der weitere Anteil nun einen Differentialanteil und einen Proportionalanteil auf.

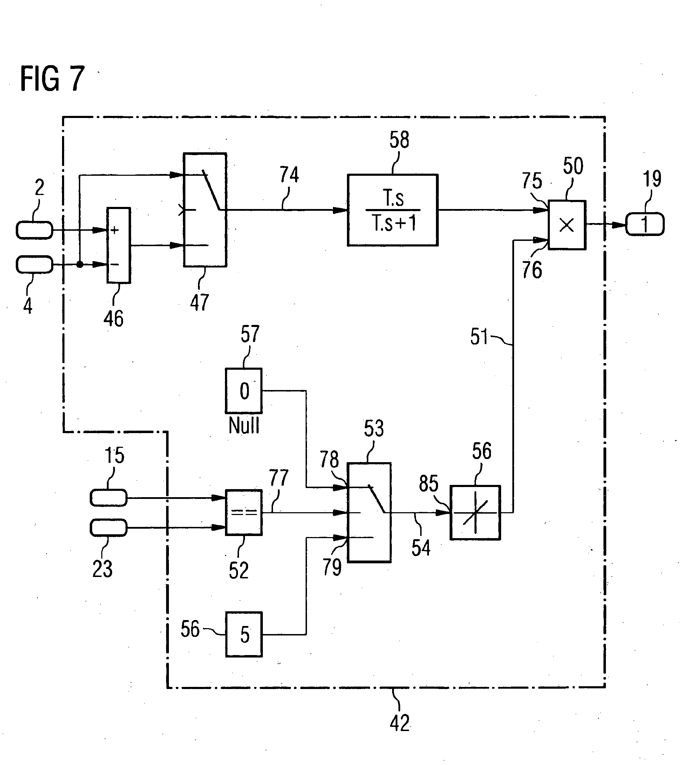

Die Figur 7 zeigt eine Ausführungsform des Differenzialanteil-Bausteins 42. Der Sollwert 2 und der Istwert 4 werden zu einem Addier-Baustein 46 weitergeleitet. Nach dem Addier-Baustein 46 gelangt ein Signal zu einem Umschalt-Baustein 47. Der Istwert 4 wird ebenfalls direkt zum Umschalt-Baustein 47 weitergeleitet. In einer alternativen Ausführungsform kann der Istwert 4 mit einem Faktor -1 multipliziert, bevor das damit entstandene invertierte Signal in den Umschalt-Baustein 47 gelangt. Über den Umschalt-Baustein 47 ist es möglich, Änderungen des Sollwertes 2 zur Berechnung des Differential-Anteils zu berücksichtigen.

Mit dem Baustein 58 wird mit einem Ausgangssignal 74 des Umschalt-Bausteins 47 ein Wert an einen Eingang 75 eines Multiplikations-Bausteins 50 weitergeleitet. Der Baustein 58 ist kein Verzögerungsbaustein, sondern ein sogenanntes DT1-Element. Es filtert und differenziert gewissermassen gleichzeitig. Der Multiplikations-Baustein 50 weist einen zweiten Eingang 76 auf.

Das Stellgrößensignal 15 und das Reglerausgangssignal 23 wird im Vergleichs-Baustein 52 verglichen. Der Vergleichs-Baustein 52 liefert ein Ausgangssignal 77, das an einen Umschalt-Baustein 53 weitergeleitet wird. Wenn die Werte des Reglerausgangssignal 23 und des Stellgrößensignals 15 gleich sind, liefert der Vergleichs-Baustein 52 einen logischen Wert 1 als Ausgangssignal 77 und ansonsten einen logischen Wert Null. Der Umschalt-Baustein 53 weist einen mit einem dem Wert Null enthaltenen Speicher-Baustein 57 verbundenen ersten Eingang 78 und einen mit einem Wert für eine Vorhaltezeit 84 enthaltenen zweiten Speicher-Baustein 56 verbundenen zweiten Eingang 79 auf. Ein Ausgangssignal 54 liegt an einem Eingang 85 eines Steigungsbegrenzungs-Baustein 55 an.

Liegt an dem Umschalt-Baustein 53 das Ausgangssignal 77 mit einem logischen Wert eins an, dann wird der Wert des Speicher-Bausteins 56 an den Steigungsbegrenzungs-Baustein 55 weitergeleitet. Ansonsten wird der Wert Null des Speicher-Bausteins 57 an den Steigungsbegrenzungs-Baustein 55 weitergeleitet. Ein Ausgangssignal 51 des Steigungsbegrenzungs-Bausteins 55 liegt an dem zweiten Eingang 76 des Multiplikations-Bausteins 50 an.

Im Multiplikations-Baustein 50 werden die an den Eingängen 75 und 76 anliegenden Signale zu dem Ausgangssignal 19 multipliziert. Auf diese Weise wird der differenzierende Anteil an den Stellbereichsgrenzen herausgenommen. Signalrauschen führt nicht mehr zum verlassen der Begrenzung. Ein stoßfreies Wiedereinsetzen des differenzierenden Anteils ist dadurch gewährleistet.

## Patentansprüche

1. Verfahren zur Regelung einer Regelgröße, die über ein Stellgrößensignal (15) veränderbar ist, die in Abhängigkeit eines Sollwertes (2) und eines Istwertes (4) für die Regelgröße mit einem Regelalgorithmus berechnet wird, der einen Integralanteil und einen weiteren Anteil aufweist, wobei das Stellgrößensignal (15), der Integralanteil und der weitere Anteil mit dem Regelalgorithmus berechnet werden,
**dadurch gekennzeichnet, dass**
der Wert des Stellgrößensignals (15) zuerst mit dem Regelalgorithmus berechnet wird und nach einem Minimum-Maximum-Begrenzer (14) begrenzt und an den Regelalgorithmus zurückgemeldet wird,
wobei eine Änderung des weiteren Anteils vernachlässigt wird, wenn folgende Bedingungen eintreten:
- der mit dem Regelalgorithmus berechnete Wert für das Stellgrößensignal (15) ist größer als der Wert, der nach dem Minimum-Maximum-Begrenzer (14) begrenzt wird und
- eine Regelabweichung (25), die aus der Differenz zwischen dem Sollwert (2) und dem Istwert (4) der Regelgröße ermittelt wird, ist größer oder gleich einem vorgebbaren Grenzwert X_{w,positiv}
oder
- der mit dem Regelalgorithmus berechnete Wert für das Stellgrößensignal (15) ist kleiner als der Wert, der nach dem Minimum-Maximum-Begrenzer (14) begrenzt wird und
- die Regelabweichung (25) ist kleiner oder gleich einem vorgebbaren Grenzwert X_{w,negativ}.

2. Verfahren nach Anspruch 1,
**dadurch gekennzeichnet, dass**
der weitere Anteil ein Proportionalanteil ist.

3. Verfahren nach Anspruch 1 oder 2,
**dadurch gekennzeichnet, dass**
der Regelalgorithmus einen Differenzialanteil aufweist.

4. Verfahren nach einem der Ansprüche 1 bis 3,
**dadurch gekennzeichnet, dass**
der Differenzialanteil zum weiteren Anteil addiert wird.

5. Verfahren nach einem der Ansprüche 1 bis 4,
**dadurch gekennzeichnet, dass**
der weitere Anteil vernachlässigt wird, wenn folgende Bedingung zusätzlich eintritt:
- Signal wurde nach oben begrenzt und
- eine Änderung der Regelabweichung (25) ist größer als ein vorgebbarer Grenzwerts X_{w,positiv}
oder
- Signal wurde nach unten begrenzt und
- eine Änderung der Regelabweichung (25) ist kleiner als ein vorgebbarer Grenzwert Δ X_{w,negativ}.

6. Verfahren nach einem der Ansprüche 3 bis 5,
**dadurch gekennzeichnet, dass** Änderungen des Sollwertes (2) zur Berechnung des Differentialanteils berücksichtigt werden können.

7. Verfahren nach einem der Ansprüche 3 bis 6.,
**dadurch gekennzeichnet, dass**
der Differentialanteil mit einer einstellbaren Zeitkonstanten gefiltert wird.

8. Verwendung des Verfahrens nach einem der Ansprüche 1 bis 7 für den Betrieb eines Verdichters.

9. Vorrichtung zur Regelung einer Regelgröße, die über ein Stellgrößensignal (15) veränderbar ist, mit einem Subtrahier-Baustein (3) zur Berechnung einer Regelabweichung (25) durch Subtrahieren eines Sollwertes (2) der Regelgröße von einem Istwert (4) der Regelgröße,
einem Integral-Inkrement-Baustein (9) zum Berechnen eines Integral-Inkrement-Anteils für das Stellgrößensignal (15) als Ausgangssignal aufgrund der Regelabweichung (25),
einem weiteren Baustein (5) zum Berechnen eines weiteren Anteils für das Stellgrößensignal (15) als Ausgangssignal aufgrund der Regelabweichung (25),
einen Umschalt-Additions-Baustein (60),
der einen ersten Eingang (61) für das Ausgangssignal des weiteren Bausteins (5) aufweist,
der einen zweiten Eingang (62) für das Ausgangssignal (71) des Integral-Inkrement-Bausteins (9) aufweist,
**gekennzeichnet durch**
einen dritten Eingang (63), den der Umschalt-Additions-Baustein (60) aufweist, für ein Schaltsignal (21) und
einen vierten Eingang (64)), den der Umschalt-Additions-Baustein (60) aufweist, für ein Signal aus einem Minimum-Maximum-Begrenzer (14), der zur Begrenzung des Wertes für das Stellgrößensignal (15) auf einen voreingestellten Wert ausgebildet ist, aufweist und
zum Berechnen eines Wertes für die Stellgröße (15) als Ausgangssignal aufgrund des weiteren Bausteins (5), dem Ausgangssignal des Integral-Inkrement-Baustein (9) und des Signals (22) aus dem Minimum-Maximum-Begrenzers (14) ausgebildet ist,
wobei der Umschalt-Additions-Baustein (60) zwischen einem ersten Zustand, bei dem das Ausgangssignal des weiteren Bausteins (5) zur Berechnung des Stellgrößensignals (15) addiert wird und einem zweiten Zustand, bei dem das Ausgangssignal des weiteren Bausteins (5) geblockt wird, umschaltbar ist,
und
einen Schalt-Baustein (12) zum Erzeugen des Schaltsignals (21) für den Umschält-Additions-Baustein (60), wobei der Schalt-Baustein (12) derart ausgebildet ist,
dass ein Schaltsignal (21) zum Umschalten in den zweiten Zustand an den Umschalt-Additions-Baustein (60) gesendet wird, wenn der Wert des Stellgrößensignals (15) größer als der nach dem Minimum-Maximum-Begrenzer (14) voreingestellte Wert ist und die Regelabweichung (25) größer oder gleich einem vorgebbaren Grenzwert X_{w,positiv} ist
oder
wenn der Wert des Stellgrößensignals (15) kleiner als der nach dem Minimum-Maximum-Begrenzer (14) voreingestellte Wert ist und die Regelabweichung, (25) kleiner oder gleich einem vorgebbaren Grenzwert X_{w,negativ} ist.

10. Vorrichtung nach Anspruch 9,
**dadurch gekennzeichnet, dass**
der Schalt-Baustein (12) derart ausgebildet ist, dass ein Schaltsignal (21) vom Schalt-Baustein (12) an den Umschalt-Additions-Baustein (60) gesendet wird, wenn der Wert des Stellgrößensignals (15) größer als der nach dem Minimum-Maximum-Begrenzer (14) eingestellte Wert ist
und
eine Änderung der Regelabweichung (25) größer einem vorgebbaren Grenzwert Δ X_{w,positiv} ist
oder
der Wert des Stellgrößensignals (15) kleiner als der nach dem Minimum-Maximum-Begrenzer (14) eingestellte Wert ist
und
eine Änderung der Regelabweichung (25) kleiner einem vorgebbaren Grenzwerts X_{w,negativ} ist.

11. Vorrichtung nach Anspruch 9 oder 10,
**dadurch gekennzeichnet, dass**
der Umschalt-Additions-Baustein (60) einen Umschalt-Baustein (13) mit dem ersten (61), dritten (63) und vierten (64) Eingang und einen Additions-Baustein (11) mit dem zweiten Eingang (62) und einen fünften Eingang (72) für ein Ausgangssignal (18) des Umschalt-Bausteins (13) umfasst.

12. Vorrichtung nach Anspruch 11,
**dadurch gekennzeichnet, dass**
der Umschalt-Baustein (13),
der erste (61) und vierte Eingang (64) zu einem sechsten Eingang (69) für ein Signal zusammengefasst ist, das aus der Summe des Ausgangssignals des weiteren Bausteins (5) und des Signals aus dem Minimum-Maximum-Begrenzer (14) gebildet ist,
den für den vierten Eingang (64) für das Signal aus dem Minimum-Maximum-Begrenzer (14) und den dritten Eingang (63) für das Schaltsignal (21) aufweist,
sowie
zwischen einem ersten Zustand, bei dem nur das Signal am sechsten Eingang (69) als Ausgangssignal (18) durchgeleitet wird und einem zweiten Zustand, bei dem nur das Signal am vierten Eingang (64) als Ausgangssignal (18) durchgeleitet wird, umschaltbar ist.

13. Vorrichtung nach Anspruch 12,
**dadurch gekennzeichnet, dass**
der Additions-Baustein (11) ausgebildet ist zum Addieren des Ausgangssignals (18) des Umschalt-Bausteins (13) und des Ausgangssignals (71) des Integral-Inkrement-Bausteins (9) zu einem Ausgangssignal.

14. Vorrichtung nach Anspruch 9 oder 10,
**dadurch gekennzeichnet, dass**
der Umschalt-Additions-Baustein (60) einen Umschalt-Baustein (13) mit dem ersten (61) und dritten (63) Eingang und einen Additions-Baustein (11) mit dem zweiten (62), vierten (64) Eingang und den fünften Eingang (72) für das Ausgangssignal (18) des Umschalt-Bausteins (13) umfasst.

15. Vorrichtung nach Anspruch 14,
**dadurch gekennzeichnet, dass**
der Umschalt-Baustein (13)
einen siebten Eingang (73) für ein den Wert 0 aufweisendes Signal aufweist
sowie
zwischen einem ersten Zustand, bei dem das Ausgangssignal (59) des weiteren Bausteins als Ausgangssignal (18) durchgeleitet wird und
einem zweiten Zustand, bei dem das den Wert 0 aufweisende Signal durchgeleitet wird, umschaltbar ist.

16. Vorrichtung nach Anspruch 15,
**dadurch gekennzeichnet, dass**
der Additions-Baustein (11) ausgebildet ist zum Addieren des Ausgangssignals (18) des Umschalt-Bausteins (13), des Ausgangssignals (71) des Integral-Inkrement-Bausteins (9) und des Signals aus dem Minimum-Maximum-Begrenzers (14) zu einem Ausgangssignal (68).

17. Vorrichtung nach einem der Ansprüche 9 bis 16,
**dadurch gekennzeichnet, dass**
der weitere Baustein (5) einen Proportional-Anteil-Baustein und einen Differentialanteil-Baustein (42) umfasst.

18. Vorrichtung nach Anspruch 17,
**dadurch gekennzeichnet, dass**
der Differenzialanteil-Baustein (42) zum Berechnen eines Differenzialanteils für das Stellgrößensignal (15) als Ausgangssignal aufgrund
der Regelabweichung (25),
des Signals (22) aus dem Minimum-Maximum-Begrenzer (14) und eines Ausgangsignals (23) des Additions-Bausteines (11) vorgesehen ist.

19. Vorrichtung nach Anspruch 17 oder 18,
**dadurch gekennzeichnet, dass**
der Proportionalanteil-Baustein (5) zum Berechnen eines Proportionalanteils für das Stellgrößensignal (15) als Ausgangssignal aufgrund der Regelabweichung (25) vorgesehen ist.

20. Vorrichtung nach einem der Ansprüche 16 bis 19,
**dadurch gekennzeichnet, dass**
ein Additionsbaustein (11) zum Addieren des Ausgangssignals des Differentialanteil-Bausteins (42) und des Ausgangssignals des Proportionalanteil-Bausteins (5) als Ausgangssignal für den weiteren Anteil vorgesehen ist.

21. Vorrichtung nach einem der Ansprüche 16 oder 20,
**dadurch gekennzeichnet, dass**
der Differenzialanteil-Baustein (42) einen Umschalt-Baustein (13) aufweist, der
einen ersten Eingang für den Wert der Regelgröße und
einen zweiten Eingang für den Wert der Regelabweichung (25) aufweist
sowie
zwischen einem ersten Zustand, bei dem die Änderung des Sollwertes (2) durchgeleitet wird und einem zweiten Zustand, bei dem nur die Regelabweichung (25) weitergeleitet wird, umschaltbar ist.

22. Vorrichtung nach einem der Ansprüche 9 bis 21,
**dadurch gekennzeichnet, dass**
der Differenzialanteil-Baustein (42) einen Verzögerungs-Baustein (48) zum Berechnen des Differentialanteils aufweist.

23. Vorrichtung nach einem der Ansprüche 9 bis 22,
**dadurch gekennzeichnet, dass**
ein erster Zwischenspeicher-Baustein (16) zum Zwischenspeichern eines Signals als Ausgangssignal vorgesehen ist,
der mit dem nach dem Minimum-Maximum-Begrenzer (14) vorhandenen Signal verbunden ist und
das Ausgangssignal des ersten Zwischenspeicher-Bausteins (16) mit dem Umschalt-Addier-Baustein (60) oder mit dem Addier-Baustein (11) verbunden ist.

24. Vorrichtung nach einem der Ansprüche 9 bis 23
**dadurch gekennzeichnet, dass**
ein zweiter Zwischenspeicher-Baustein (17) zum Zwischenspeichern eines Signals als Ausgangssignal vorgesehen ist,
der mit dem Ausgangsignals des Additions-Bausteins (11) verbunden ist und
das Ausgangssignal des Zwischenspeicher-Bausteins (17) mit dem Schalt-Baustein (12) verbunden ist.

25. Vorrichtung nach einem der Ansprüche 9 bis 24,
**dadurch gekennzeichnet, dass**
ein dritter Zwischenspeicher-Baustein (7) zum Zwischenspeichern eines Signals als Ausgangssignal vorgesehen ist,
der mit dem Ausgangssignal des weiteren Bausteins (5) verbunden ist und
das Ausgangssignal des weiteren Zwischenspeicher-Bausteins mit dem ersten Eingang (61) des Umschalt-Additions-Bausteins (60) verbunden ist.

## Claims

1. Method for controlling a controlled variable which can be varied by means of a manipulated variable signal (15), which is calculated depending on a setpoint value (2) and an actual value (4) for the controlled variable by a control algorithm having an integral component and a further component, wherein the manipulated variable signal (15), the integral component and the further component are calculated by the control algorithm, **characterized in that**
the value of the manipulated variable signal (15) is first calculated by the control algorithm and limited according to a minimum-maximum limiter (14) and reported back to the control algorithm,
wherein a change in the further component is disregarded if the following conditions occur:
- the value for the manipulated variable signal (15) calculated by the control algorithm is greater than the value which is limited according to the minimum-maximum limiter (14), and
- a control deviation (25) determined from the difference between the setpoint value (2) and the actual value (4) of the controlled variable is greater than or equal to a predefinable limit value X_{w,positive} or
- the value for the manipulated variable signal (15) calculated by the control algorithm is less than the value which is calculated according to the minimum-maximum limiter (14), and
- the control deviation (25) is less than or equal to a predefinable limit value X_{w,negative}.

2. Method according to Claim 1,
**characterized in that**
the further component is a proportional component.

3. Method according to Claim 1 or 2,
**characterized in that**
the control algorithm has a derivative component.

4. Method according to any of Claims 1 to 3,
**characterized in that**
the derivative component is added to the further component.

5. Method according to any of Claims 1 to 4,
**characterized in that**
the further component is disregarded if the following condition additionally occurs:
- signal was upwardly limited, and
- a change in the control deviation (25) is greater than a predefinable limit value Δ X_{w,positive} or
- signal was downwardly limited, and
- a change in the control deviation (25) is less than a predefinable limit value Δ X_{w,negative}.

6. Method according to any of Claims 3 to 5,
**characterized in that**
changes in the setpoint value (2) can be taken into account for calculating the derivative component.

7. Method according to any of Claims 3 to 6,
**characterized in that**
the derivative component is filtered with an adjustable time constant.

8. Use of the method according to any of Claims 1 to 7 for the operation of a compressor.

9. Device for controlling a controlled variable which can be varied by means of a manipulated variable signal (15), comprising a subtracting module (3) for calculating a control deviation (25) by subtracting a setpoint value (2) of the controlled variable from an actual value (4) of the controlled variable,
an integral increment module (9) for calculating an integral increment component for the manipulated variable signal (15) as output signal on the basis of the control deviation (25),
a further module (5) for calculating a further component for the manipulated variable signal (15) as output signal on the basis of the control deviation (25),
a changeover-addition module (60),
which has a first input (61) for the output signal of the further module (5),
which has a second input (62) for the output signal (71) of the integral increment module (9),
**characterized by**
a third input (63), which the changeover-addition module (60) has, for a switching signal (21) and
a fourth input (64), which the changeover-addition module (60) has, for a signal from a minimum-maximum limiter (14) designed for limiting the value for the manipulated variable signal (15) to a preset value, and
designed for calculating a value for the manipulated variable (15) as output signal on the basis of the further module (5), the output signal of the integral increment module (9) and the signal (22) from the minimum-maximum limiter (14),
wherein the changeover-addition module (60) can be changed over between a first state, in which the output signal of the further module (5) is added to the calculation of the manipulated variable signal (15), and a second state, in which the output signal of the further module (5) is blocked,
and
a switching module (12) for generating the switching signal (21) for the changeover-addition module (60), wherein the switching module (12) is designed in such a way
that a switching signal (21) for changing over to the second state is transmitted to the changeover-addition module (60) if the value of the manipulated variable signal (15) is greater than the value preset according to the minimum-maximum limiter (14) and the control deviation (25) is greater than or equal to a predefinable limit value X_{w,positive}
or
if the value of the manipulated variable signal (15) is less than the value preset according to the minimum-maximum limiter (14) and the control deviation (25) is less than or equal to a predefinable limit value X_{w,negative}.

10. Device according to Claim 9,
**characterized in that**
the switching module (12) is designed in such a way that a switching signal (21) is transmitted from the switching module (12) to the changeover-addition module (60) if the value of the manipulated variable signal (15) is greater than the value set according to the minimum-maximum limiter (14)
and
a change in the control deviation (25) is greater than a predefinable limit value Δ X_{w,positive}
or
the value of the manipulated variable signal (15) is less than the value set according to the minimum-maximum limiter (14)
and
a change in the control deviation (25) is less than a predefinable limit value Δ_{w,negative}.

11. Device according to Claim 9 or 10,
**characterized in that**
the changeover-addition module (60) comprises a changeover module (13) having the first (61), third (63) and fourth (64) inputs and an addition module (11) having the second input (62) and a fifth input (72) for an output signal (18) of the changeover module (13).

12. Device according to Claim 11,
**characterized in that**
the changeover module (13),
in which the first input (61) and fourth input (64) are combined to form a sixth input (69) for a signal formed from the sum of the output signal of the further module (5) and the signal from the minimum-maximum limiter (14), has the fourth input (64) for the signal from the minimum-maximum limiter (14) and the third input (63) for the switching signal (21),
and
can be changed over between a first state, in which only the signal at the sixth input (69) is passed through as output signal (18), and a second state, in which only the signal at the fourth input (64) is passed through as output signal (18).

13. Device according to Claim 12,
**characterized in that**
the addition module (11) is designed for adding the output signal (18) of the changeover module (13) and the output signal (71) of the integral increment module (9) to form an output signal.

14. Device according to Claim 9 or 10,
**characterized in that**
the changeover-addition module (60) comprises a changeover module (13) having the first (61) and third (63) inputs and an addition module (11) having the second (62) and fourth (64) inputs and the fifth input (72) for the output signal (18) of the changeover module (13).

15. Device according to Claim 14,
**characterized in that**
the changeover module (13)
has a seventh input (73) for a signal having the value 0 and
can be changed over between a first state, in which the output signal (59) of the further module is passed through as output signal (18), and
a second state, in which the signal having the value 0 is passed through.

16. Device according to Claim 15,
**characterized in that**
the addition module (11) is designed for adding the output signal (18) of the changeover module (13), the output signal (71) of the integral increment module (9) and the signal from the minimum-maximum limiter (14) to form an output signal (68).

17. Device according to any of Claims 9 to 16, **characterized in that**
the further module (5) comprises a proportional component module and a derivative component module (42).

18. Device according to Claim 17,
**characterized in that**
the derivative component module (42) is provided for calculating a derivative component for the manipulated variable signal (15) as output signal on the basis of the control deviation (25),
the signal (22) from the minimum-maximum limiter (14) and an output signal (23) of the addition module (11).

19. Device according to Claim 17 or 18,
**characterized in that**
the proportional component module (5) is provided for calculating a proportional component for the manipulated variable signal (15) as output signal on the basis of the control deviation (25).

20. Device according to any of Claims 16 to 19,
**characterized in that**
an addition module (11) is provided for adding the output signal of the derivative component module (42) and the output signal of the proportional component module (5) as output signal for the further component.

21. Device according to either of Claims 16 and 20,
**characterized in that**
the derivative component module (42) has a changeover module (13), which
has a first input for the value of the controlled variable and
has a second input for the value of the control deviation (25)
and
can be changed over between a first state, in which the change in the setpoint value (2) is passed through, and a second state, in which only the control deviation (25) is forwarded.

22. Device according to any of Claims 9 to 21,
**characterized in that**
the derivative component module (42) has a delay module (48) for calculating the derivative component.

23. Device according to any of Claims 9 to 22,
**characterized in that**
a first buffer storage module (16) for buffer storing a signal as output signal is provided,
which is connected to the signal present after the minimum-maximum limiter (14), and
the output signal of the first buffer storage module (16) is connected to the changeover-addition module (60) or to the addition module (11).

24. Device according to any of Claims 9 to 23,
**characterized in that**
a second buffer storage module (17) for buffer storing a signal as output signal is provided,
which is connected to the output signal of the addition module (11), and
the output signal of the buffer storage module (17) is connected to the switching module (12).

25. Device according to any of Claims 9 to 24,
**characterized in that**
a third buffer storage module (7) for buffer storing a signal as output signal is provided,
which is connected to the output signal of the further module (5), and
the output signal of the further buffer storage module is connected to the first input (61) of the changeover-addition module (60).

## Revendications

1. Procédé de régulation d'une grandeur de réglage, qui peut être modifié par un signal ( 15 ) de grandeur de réglage que l'on calcule, en fonction d'une valeur ( 2 ) de consigne et d'une valeur ( 4 ) réelle de la grandeur de réglage, par un algorithme de réglage, lequel a une composante intégrale et une autre composante,
dans lequel on calcule le signal ( 15 ) de grandeur de réglage, la composante intégrale et l'autre composante par l'algorithme de réglage,
**caractérisé en ce que**
l'on calcule la valeur du signal ( 15 ) de grandeur de réglage d'abord par l'algorithme de réglage et on la limite suivant un limiteur ( 14 ) de minimum-maximum et on la renvoie à l'algorithme de réglage,
une modification de l'autre composante étant négligée si les conditions suivantes sont satisfaites :
- la valeur calculée par l'algorithme de réglage du signal ( 15 ) de grandeur de réglage est plus grande que la valeur qui a été limitée suivant le limiteur ( 14 ) de minimum-maximum et
- un écart ( 25 ) de réglage, qui a été déterminé à partir de la différence entre la valeur ( 2 ) de consigne et la valeur ( 4 ) réelle de la grandeur de réglage, est supérieur ou égal à une valeur X_{W,positiv} limite donnée à l'avance
ou
- la valeur calculée par l'algorithme de réglage du signal ( 15 ) de grandeur de réglage est plus petite que la valeur, qui a été limitée suivant le limiteur ( 14 ) de minimum-maximum, et
- l'écart ( 25 ) de réglage est inférieur ou égal à une valeur X_{W,négativ} limite pouvant être donnée à l'avance.

2. Procédé suivant la revendication 1,
**caractérisé en ce que**
l'autre composante est une composante proportionnelle.

3. Procédé suivant la revendication 1 ou 2,
**caractérisé en ce que**
l'algorithme de réglage a une composante différentielle.

4. Procédé suivant l'une des revendications 1 à 3,
**caractérisé en ce que**
l'on ajoute la composante différentielle à l'autre composante.

5. Procédé suivant l'une des revendications 1 à 4,
**caractérisé en ce que**
l'on néglige l'autre composante si la condition suivante est en outre satisfaite :
- le signal a été limité vers le haut et
- une variation de l'écart ( 25 ) de réglage est plus grande qu'une valeur Δ X_{W,positiv} limite donnée à l'avance
ou
- le signal a été limité vers le bas et
- une variation de l'écart ( 25 ) de réglage est plus petite qu'une valeur Δ X_{W,negativ} limite pouvant être donnée à l'avance.

6. Procédé suivant l'une des revendications 3 à 5,
**caractérisé en ce que**
l'on peut tenir compte de variations de la valeur ( 2 ) de consigne pour le calcul de la composante différentielle.

7. Procédé suivant l'une des revendications 3 à 6,
**caractérisé en ce que**
l'on filtre la composante différentielle par une constante de temps réglable.

8. Utilisation du procédé suivant l'une des revendications 1 à 7 pour le fonctionnement d'un compresseur.

9. Dispositif de régulation d'une grandeur de réglage, qui peut être modifiée par un signal ( 15 ) de grandeur de réglage, comprenant un module ( 3 ) de soustraction pour le calcul d'un écart ( 25 ) de réglage par soustraction d'une valeur ( 2 ) de consigne de la grandeur de réglage d'une valeur ( 4 ) réelle de la grandeur de réglage,
un module ( 9 ) d'intégral-incrément pour le calcul d'une composante d'incrément intégral du signal ( 15 ) de grandeur de réglage comme signal de sortie sur la base de l'écart ( 25 ) de régulation,
un autre module ( 5 ) pour le calcul d'une autre composante du signal ( 15 ) de grandeur de réglage comme signal de sortie sur la base de l'écart ( 25 ) de réglage,
un module ( 60 ) de commutation-addition,
qui a une première entrée ( 61 ) pour le signal de sortie de l'autre module ( 5 ),
qui a une deuxième entrée ( 62 ) pour le signal ( 71 ) de sortie du module ( 9 ) d'intégral-incrément,
**caractérisé par**
une troisième entrée ( 63 ) qu'a le module ( 60 ) de commutation-addition pour un signal ( 21 ) de commutation et une quatrième entrée ( 64 ) qu'a le module ( 60 ) de commutation-addition pour un signal provenant du limiteur ( 14 ) de minimum-maximum, lequel est constitué pour la limitation de la valeur du signal ( 15 ) de grandeur de réglage à une valeur réglée à l'avance et
est constitué pour le calcul d'une valeur de la grandeur ( 15 ) de réglage comme grandeur de sortie sur la base de l'autre module ( 5 ) du signal de sortie du module ( 9 ) d'intégral-incrément et du signal ( 22 ) du limiteur ( 14 ) de minimum-maximum,
le module ( 60 ) de commutation-addition pouvant être commuté entre un premier état dans lequel le signal de sortie de l'autre module ( 5 ) est additionné pour le calcul du signal ( 15 ) de la grandeur de réglage et un deuxième état dans lequel le signal de sortie de l'autre module ( 5 ) est bloqué et
un module ( 12 ) de commutation pour produire le signal ( 21 ) de commutation pour le module ( 60 ) de commutation-addition, le module ( 12 ) de commutation étant constitué de manière à envoyer un signal ( 21 ) de commutation au module ( 60 ) de commutation-addition pour le passage dans le deuxième état, si la valeur du signal ( 15 ) de grandeur de réglage est plus grande que la valeur réglée à l'avance suivant le limiteur de minimum-maximum et si l'écart ( 25 ) de régulation est supérieur ou égal à une valeur X_{W,positiv} pouvant être donnée à l'avance
ou
si la valeur du signal ( 15 ) de grandeur de réglage est plus petite que la valeur réglée à l'avance suivant le limiteur ( 14 ) de minimum-maximum et l'écart ( 25 ) de régulation est inférieur ou égal à une valeur X_{W,negativ} limite donnée à l'avance.

10. Dispositif suivant la revendication 9,
**caractérisé en ce que**
le module ( 12 ) de commutation est constitué de manière à envoyer un signal ( 21 ) de commutation du module ( 12 ) de commutation au module ( 60 ) de commutation-addition, si la valeur du signal ( 15 ) de grandeur de réglage est plus grande que la valeur réglée suivant le limiteur ( 14 ) de minimum-maximum
et
si une variation de l'écart ( 25 ) de réglage est plus grande qu'une valeur Δ X_{W,positiv} limite pouvant être donnée à l'avance ou
si la valeur du signal ( 15 ) de grandeur de réglage est plus petite que la valeur réglée suivant le limiteur ( 14 ) de minimum-maximum
et
si une variation de l'écart ( 25 ) de réglage est plus petite qu'une valeur Δ X_{W,negativ} limite pouvant être donnée à l'avance.

11. Dispositif suivant la revendication 9 ou 10,
**caractérisé en ce que**
le module ( 60 ) de commutation-addition comprend un module ( 13 ) de commutation ayant une première ( 61 ), troisième ( 63 ) et quatrième ( 64 ) entrées et un module ( 11 ) d'addition ayant la deuxième entrée ( 62 ) et une cinquième entrée ( 72 ) pour un signal ( 18 ) de sortie du module ( 13 ) de commutation.

12. Dispositif suivant la revendication 11,
**caractérisé en ce que**
dans le module ( 13 ) de commutation, la première ( 61 ) et la quatrième ( 64 ) sont rassemblées en une sixième entrée ( 69 ) pour un signal, qui est formé de la somme du signal de sortie de l'autre module ( 5 ) et du signal du limiteur ( 14 ) de minimum-maximum,
le module ( 13 ) de commutation a la quatrième entrée ( 64 ) pour le signal du limiteur ( 14 ) de minimum-maximum et la troisième entrée ( 63 ) pour le signal ( 21 ) de commutation de commutation,
ainsi que
peut passer entre un premier état, dans lequel seul le signal à la sixième entrée ( 69 ) passe comme signal ( 18 ) de sortie, et un deuxième état, dans lequel seul le signal à la quatrième entrée ( 64 ) passe comme signal ( 18 ) de sortie.

13. Dispositif suivant la revendication 12,
**caractérisé en ce que**
le module ( 11 ) d'addition est constitué pour l'addition du signal ( 18 ) de sortie du module ( 13 ) de commutation et du signal ( 71 ) de sortie du module ( 9 ) d'intégral-incrément en un signal de sortie.

14. Dispositif suivant la revendication 9 ou 10,
**caractérisé en ce que**
le module ( 60 ) de commutation-addition a un module ( 13 ) de commutation ayant la première ( 61 ) et la troisième ( 63 ) entrées et un module ( 11 ) d'addition ayant la deuxième ( 62 ) et la quatrième ( 64 ) entrées et la cinquième entrée ( 72 ) pour le signal ( 18 ) de sortie du module ( 13 ) de commutation.

15. Dispositif suivant la revendication 14,
**caractérisé en ce que**
le module ( 13 ) de commutation
a une septième ( 73 ) entrée pour un signal ayant la valeur 0 ainsi que
peut passer entre un premier état, dans lequel le signal ( 59 ) de sortie de l'autre module passe comme signal ( 18 ) de sortie, et
un deuxième état, dans lequel c'est le signal ayant la valeur 0 qui passe.

16. Dispositif suivant la revendication 15,
**caractérisé en ce que**
le module ( 11 ) d'addition est constitué pour l'addition du signal ( 18 ) de sortie du module ( 13 ) de commutation, du signal ( 71 ) de sortie du module ( 9 ) d'intégral-incrément et du signal du limiteur ( 14 ) de minimum-maximum en un signal ( 68 ) de sortie.

17. Dispositif suivant l'une des revendications 9 à 16,
**caractérisé en ce que**
l'autre module ( 5 ) comprend un module de composante proportionnelle et un module ( 42 ) de composante différentielle.

18. Dispositif suivant la revendication 17,
**caractérisé en ce que**
le module ( 42 ) de composante différentielle est prévu pour le calcul d'une composante différentielle du signal ( 15 ) de grandeur de réglage comme signal de sortie sur la base de l'écart ( 25 ) de réglage,
du signal ( 22 ) du limiteur ( 14 ) de minimum-maximum et
d'un signal ( 23 ) de sortie du module ( 11 ) d'addition.

19. Dispositif suivant la revendication 17 ou 18,
**caractérisé en ce que**
le module ( 5 ) de composante proportionnelle est prévu pour le calcul d'une composante proportionnelle du signal ( 15 ) de grandeur de réglage comme signal de sortie sur la base de l'écart ( 25 ) de réglage.

20. Dispositif suivant l'une des revendications 16 à 19,
**caractérisé en ce que**
un module ( 11 ) d'addition est prévu pour l'addition du signal de sortie du module ( 42 ) de composante différentielle et du signal de sortie du module ( 5 ) de composante proportionnelle comme signal de sortie de l'autre composante.

21. Dispositif suivant l'une des revendications 16 ou 20,
**caractérisé en ce que**
le module ( 42 ) de composante différentielle a un module ( 13 ) de commutation qui
a une première entrée pour la valeur de la grandeur de réglage et
une deuxième entrée pour la valeur de l'écart ( 25 ) de réglage
ainsi que
passe entre un premier état, dans lequel passe la variation de la valeur ( 2 ) de consigne, et un deuxième état, dans lequel seul l'écart ( 25 ) de réglage est acheminé.

22. Dispositif suivant l'une des revendications 9 à 21,
**caractérisé en ce que**
le module ( 42 ) de composante différentielle a un module ( 48 ) de temporisation pour le calcul de la composante différentielle.

23. Dispositif suivant l'une des revendications 9 à 22,
**caractérisé en ce qu'**
un premier module ( 16 ) de mémoire intermédiaire est prévu pour mémoriser intermédiairement un signal comme signal de sortie,
module qui est relié au signal présent suivant le limiteur ( 14 ) de minimum-maximum et
le signal de sortie du premier module ( 16 ) de mémoire intermédiaire est relié au module ( 60 ) de commutation-addition ou au module ( 11 ) d'addition.

24. Dispositif suivant l'une des revendications 9 à 23,
**caractérisé en ce que**
un deuxième module ( 17 ) de mémoire intermédiaire est prévu pour la mémorisation intermédiaire d'un signal comme signal de sortie,
module qui est relié au signal de sortie du module ( 11 ) d'addition et
le signal de sortie du module ( 17 ) de mémoire intermédiaire est relié au module ( 12 ) de commutation.

25. Dispositif suivant l'une des revendications 9 à 24,
**caractérisé en ce que**
un troisième module ( 7 ) de mémoire intermédiaire est prévu pour la mémorisation intermédiaire d'un signal comme signal de sortie,
module qui est relié au signal de sortie de l'autre module ( 5 ) et
le signal de sortie de l'autre module de mémoire intermédiaire est relié à la première entrée ( 61 ) du module ( 60 ) de commutation-addition.
